# EUROPEAN PATENT APPLICATION

(11) **EP 2 105 596 A2**
(43) Date of publication of application: **30.09.2009**
(21) Application number: 09003826.6
(22) Date of filing: 17.03.2009
(51) Int. Cl.: F02B 37/02, F02B 37/16, F01N 3/021, F01N 3/30, F01M 13/04, F02M 25/07

(54) **Pre-turbine exhaust filtration system for internal combustion engines**

(30) Priority: 25.03.2008 US 54547
(71) Applicant: International Truck Intellectual Property Company, LLC., Warrenville, IL 60555 (US)
(72) Inventor: Gudorf, Kevin V., Indianapolis, IN 46237-9345 (US); Watermolen, Chad E., Fort Wayne IN 68435 (US)
(74) Representative: Kuhnen & Wacker

(57) **Abstract**

An air induction and exhaust system for a diesel engine provides particulate filtering upstream from a turbocharger assembly (116) in the exhaust system. The air induction system provides for compression of the charge air, with an induction compressor (419) being part of a turbocharger system. The exhaust and induction impellers are located outside of a vehicle engine compartment to aid thermal management. The exhaust system provides a diesel particulate filter (32) which is located in the exhaust system in close proximity to an engine exhaust manifold and upstream from the exhaust impeller (417) of the turbocharger. With the diesel particulate filter (32) so located exhaust heat helps initiate carbon oxidation in the filter (32), and heat generated by oxidation in the filter (32) contributes to turbocharger (116) operation.

## Description

### BACKGROUND OF THE INVENTION

### 1. Technical Field:

The invention relates to exhaust system configurations for a turbocharged diesel engine and more particularly to configurations improving thermal management of the exhaust system.

### 2. Description of the Problem:

The use of turbocharging for increasing the efficiency and boosting the peak power output of an internal combustion engine is well known. An exhaust energy recovery turbine or impeller is positioned in the exhaust stream from the engine and uses energy from the exhaust gas to drive a compressor feeding into the engine's air intake system. The compressor boosts the density and pressure of air delivered to the engine's intake manifold allowing additional fuel to be introduced to the cylinders and combusted compared to conventionally aspirated engines of like displacement. The application of turbocharging allows the use of smaller displacement, lighter weight engines in many applications, which reduces the weight of the vehicle and thereby saves fuel.

Complicating the application of turbocharging to diesel engines are thermal management issues and the need to meet government emission standards, particularly those relating to NO*ₓ* and particulate emissions. Put briefly, thermal management of the exhaust system and in the engine compartment is in tension with emissions control requirements. Because turbocharging recaptures some of the energy from the exhaust stream it reduces exhaust gas temperature. In order to protect downstream exhaust system components and to capture the most energy, turbocharger exhaust turbines have traditionally directly followed the engine exhaust manifold. Although high temperatures can impose stress on turbocharger components, the immediate reduction in exhaust gas temperature has protected other downstream components from some stress. In contemporary emissions control systems however, high temperatures may be required for selected operations. Of particular interest on diesel engine equipped vehicles is the requirement of high temperatures for initiating regeneration of diesel particulate filters. The diesel particulate filter regeneration process, involving the rapid oxidation of carbon based compounds, typically adds substantial amounts of heat to the system itself once initiated.

Thermal management issues have occasionally been considered in the art. In United States Patent No. 6,745,568 it was observed, among other factors, that "extreme under-hood temperatures are generated by turbochargers sometimes causing the cooling system of the vehicle to exceed its capabilities". The '568 patent went on to observe that "extreme under-hood temperatures" could adversely affect plastic and rubber components, necessitate heat shielding around the turbocharger and impose strains on the vehicle engine cooling system. While it might have been better to say that turbochargers located in close proximity to the engine block "retain heat" in the engine compartment rather than "generate heat", and that turbochargers impose demands on cooling systems potentially exceeding their capacities rather than that they cause cooling systems to exceed their "capabilities", the concerns noted in the '568 patent concerning cooling systems are valid.

The '568 patent teaches displacing the turbocharger assembly from the engine compartment and placing it well downstream from the engine, where it takes the place of a vehicle's muffler. The patent termed this "remote mounting" and will be referred to here as "remote location". By so locating the turbocharger the heat retention issues raised by the assembly are removed from the engine compartment. The '568 patent appears to be directed to aftermarket applications, in which case the efficiency gains of locating the turbocharger as close as possible to its heat source were outweighed by the concerns of imposing additional heat loads on an engine cooling system that was not necessarily designed to take on the heat load of "conventionally located" turbocharging (particularly in view of the additional load generated by combusting more fuel per piston stroke).

Remote location of the turbocharger as taught by the '568 patent also partially dealt with another load imposed on engine cooling systems by turbocharger intercoolers/charge air cooling ("CAC") systems. The ambient air drawn and compressed by turbochargers is termed "charge air." The compression of any gas results in an increase in its air temperature. CAC systems (sometimes referred to as "intercoolers") are used to reduce the temperature of this air increasing its density before introduction to the engine combustion chambers. Piping for CAC systems are frequently installed on, next to, or even through the vehicle radiator, to facilitate the transfer of heat from the charge air to the vehicle cooling system. The extended length of the pipe running from the compressor to the engine in the '568 system gave the gas in the pipe some time to cool, reducing the need for a dedicated intercooler.

The proprietor of the '568 patent maintains a website for marketing of aftermarket turbocharging products (www.ststurbo.com). The products sold appear oriented to spark ignition engines and are installed on vehicles downstream from exhaust system pollution control systems. While the '568 patent is represented as applicable to spark ignition and diesel cycle engines, no specific teachings appear relating to incorporating such a system into a diesel vehicle. Remote mounting or location of a turbocharger on a contemporary diesel equipped must take into account the operating requirements of diesel engine emission control systems, particularly the requirement of delivering heat to a diesel particulate filter (DPF) for periodic regeneration of the filter.

The regeneration of diesel particulate filters involves the oxidation of carbon compounds retained in the filter from the engine exhaust. In many conventional turbocharger installations on diesel vehicles, the turbocharger is located in the engine compartment and adjacent to the exhaust manifold, with an exhaust pipe connecting an outlet from the exhaust turbine to a diesel particulate filter. The pipes connecting the turbocharger outlet to the DPF have been insulated to retain heat to help initiate carbon oxidation in the DPF for regeneration. It has been recognized that there is some inherent inefficiency in this arrangement since the turbocharger removes heat from the exhaust system which would be useful in initiating DPF regeneration. In addition, DPF regeneration, once initiated, heats the exhaust. This has required the addition of diffusers to the exhaust system to draw ambient air into the stream to reduce its temperature before it is vented to the atmosphere.

Another feature of emissions control on diesel engines is partial exhaust gas recirculation. Exhaust gas for recirculation to the engine air induction or intake system on a turbocharged vehicle can be sampled before or after the exhaust turbine. On some vehicles the exhaust gas for recirculation has been drawn from ahead of the turbocharger to avoid the need to boost the pressure of the gas for insertion to the pressurized induction system. Such gas is unfiltered and contributes to clogging or "gumming up" of contemporary EGR systems. Still another feature is a one way valve (akin to an automotive positive crankcase ventilation or PCV valve) is connected to dump blow by into the exhaust system after the turbocharger exhaust impeller but ahead of the DPF. In considering the present invention it may also be taken into consideration that diesel engines can be deliberately operated in an inefficient manner to supply oxygen (and fuel) in the exhaust stream to support DPF regeneration.

### SUMMARY OF THE INVENTION

According to the invention there is provided an air induction and exhaust system for a turbocharged internal combustion engine, particularly a diesel engine. An air induction subsystem utilized compressed charge air, with an induction compressor being part of a turbocharger system. The turbocharger system provides an exhaust turbine and the induction compressor which are jointly located at a point displaced from an engine compartment of a vehicle. The exhaust subsystem provides a diesel particulate filter which is located in the exhaust system in close proximity to an engine exhaust manifold and upstream from the exhaust turbine. With the diesel particulate filter so located exhaust heat helps initiate carbon oxidation in the filter, and heat generated by oxidation in the filter contributes to turbocharger operation. Exhaust gas recirculation is provided from the exhaust subsystem to the air induction subsystem from between the filter and the exhaust turbine to the pressurized portion of the air induction subsystem. A positive crankcase ventilation type valve is connected to discharge into the exhaust system ahead of the diesel particulate filter so that the diesel particulate filter clears oil from the engine blow by. This arrangement reduces exhaust turbine "coking". Charge air cooling is partially provided along the length of conduit connecting the compressor to the remainder of the air induction subsystem.

Additional effects, features and advantages will be apparent in the written description that follows.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

**Fig. 1** is a plan view of a vehicle chassis with a high level schematic of prior art exhaust and induction systems.

**Fig. 2** is a schematic illustration of a prior art exhaust system (including alternative exhaust gas recirculation lines) for a turbocharged engine exhaust and air inductions assemblies.

**Fig. 3** is a plan view of a vehicle chassis with a high level schematic illustrating the location of major components of the exhaust and induction systems arranged in accordance with the teachings of the present invention.

**Fig. 4** is a more detailed schematic of the exhaust and induction systems of Fig. 3.

### DETAILED DESCRIPTION OF THE INVENTION

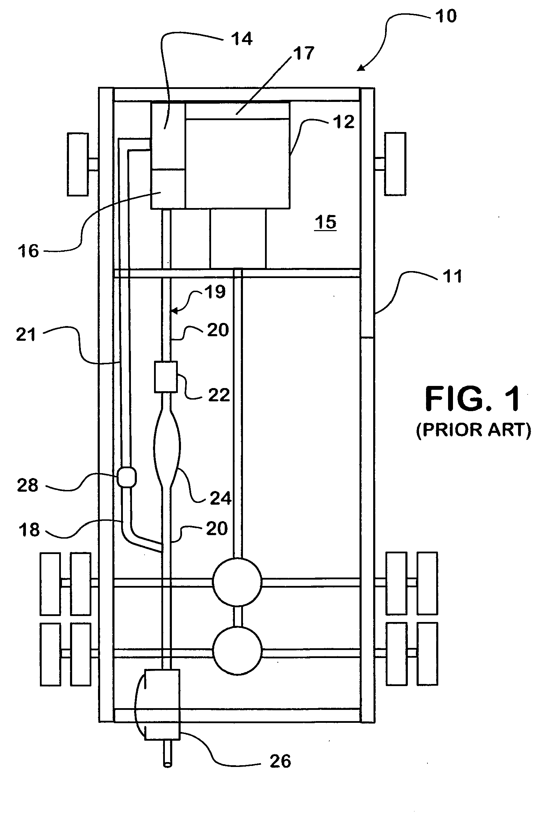

Referring now to the figures and in particular to **Fig. 1**, a vehicle **10** equipped with an internal combustion engine **12** and prior art exhaust and induction systems, is illustrated. Vehicle **10** includes a chassis **11** which supports the internal combustion engine **12** which is located in an engine compartment **15** at the front end of the vehicle. Engine **12** has an air intake or induction system **14** into which air is drawn from the ambient environment and compressed for delivery to the engine's cylinders. A high pressure exhaust stage **16** from engine **12** includes an exhaust manifold and at least a first stage exhaust turbine/impeller. The high pressure first stage exhaust turbine is mechanically coupled to a compressor/impeller in the air intake system **14** to compress air for the air intake system. Engine **12** and the high pressure exhaust stage **16** are located in the engine compartment **15** with the first state exhaust turbine being physically closely coupled to the exhaust manifold for maximum thermal efficiency. The air intake system **14** is located in proximity to a radiator **17** to provide compressed air cooling (CAC) of the charge air by transfer of heat from the charge air to the engine cooling system.

Extending toward the back of vehicle chassis **10** from the high pressure exhaust stage **16** is a low pressure exhaust system **19** which includes an exhaust pipe **20**, a particulate trap **22**, an SCR catalytic converter or NO*_{X}* adsorber **24** and a muffler **26**. Typically exhaust systems have included either the particulate trap **22** or the muffler **26**, but not both. An exhaust gas recirculating (EGR) line 21 is connected via sampling line 18 to exhaust pipe **20** at a point downstream from NO*_{X}* adsorber **24** and between the adsorber and muffler **26** (if present). The point of connection has been relatively displaced from the engine compartment 15 to allow for cooling of the exhaust gas in the exhaust pipe **20** and EGR recirculating line **21** before reintroduction to the air intake system **14**. Exhaust gas is drawn into EGR sampling line **18** by an electrically driven compressor pump **28** located in return line **21**. Compressor **28** is likewise located at a point relatively removed from engine compartment **15**. EGR return line **21** extends between compressor **28** and air intake system **14** and is made relatively long to allow cooling of the compressed exhaust gas before introduction to the air intake system. Preferably, EGR return line **21** delivers exhaust gas to an engine intake manifold following the compressor stage of the air intake system **14** although exhaust gas can be returned to other points in the intake system, such as upstream from the compressor/supercharger.

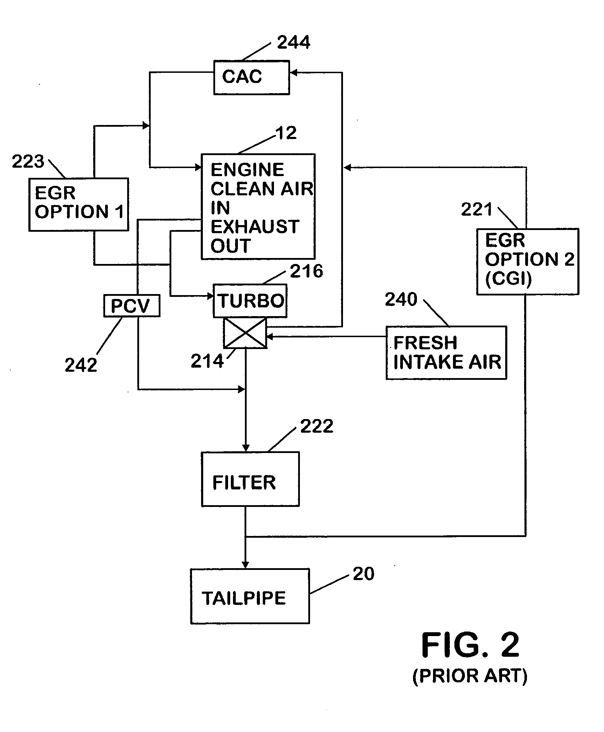

Referring now to **Fig. 2**, the flow of air through prior art exhaust and induction systems, including alternative routes for exhaust gas recirculation, is illustrated. Air is drawn into the systems by a compressor **214** through a fresh air intake **240**. From compressor **214** the compressed charge air passes to a charge air cooling system **244** (intercooler) to the vehicle engine where it supports combustion of a fuel producing a high pressure/high temperature by product or exhaust gas. The exhaust gas is treated to remove effluents and to recover usable heat energy. The exhaust impeller or turbine **216** is located in close proximity to the engine for the efficient recapture of heat from the exhaust gas. The turbine **216** is mechanically coupled to the induction compressor **214** to drive the induction compressor. The exhaust gas passes out of an outlet from the exhaust turbine to a diesel particulate filter **222** and then to the environment by way of a tailpipe 20.

The basic flow of air through the induction and exhaust systems is modified to some extent by pollution control measures including provisions for partial exhaust gas recirculation and the handling of crankcase blow by. Since the exhaust gas is returned to a pressurized induction chamber it has been considered desirable in some applications to sample pressurized exhaust gas from the exhaust manifold as represented by EGR option A **223**. Such gas is dirty and hot compromising the effectiveness of charge air cooling (since the gas is highly corrosive it is inserted after the intercooler to protect the intercooler from corrosion). An alternative has been to recirculate exhaust gas after filtering by the DPF **222** as represented by EGR option B **221**. This is termed Clean Gas Insertion (CGI) but has required a compression pump in the return line to provide the pressure to overcome the pressure in the induction system. The returned gas is sufficiently clean for the charge air cooling system **244**. Finally, crankcase blow-by is discharged by valve **242** to the exhaust system downstream from the exhaust turbine **216**, avoiding fouling of the turbine, but upstream from filter **222** so that the blow by is treated.

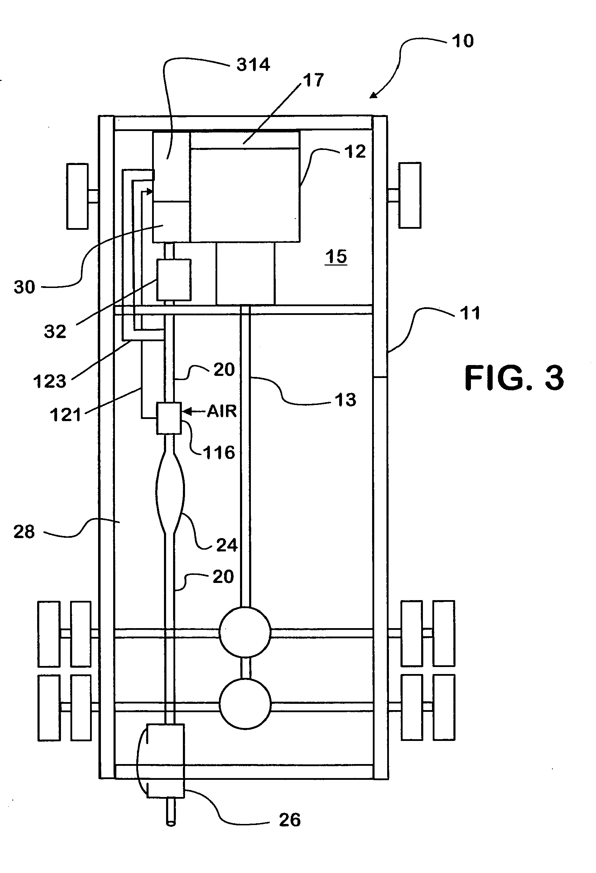

Referring now to **Fig. 3**, vehicle **10** now incorporates the repositioned turbocharger **116** and modified exhaust and induction subsystems of the present invention. As before, vehicle **10** includes a chassis **11** which supports an internal combustion engine **12** located in an engine compartment **15**, typically at the front end of the vehicle. Engine **12** has an air induction system **314** which delivers air drawn from the ambient environment to the engine's cylinders. Air induction system **314** is located adjacent radiator **17** which provides a heat sink for CAC piping. Air is forced into the induction system **314** at high pressure from a turbocharger **116** which is remotely mounted relative to the engine compartment **14** on chassis **11**. Turbocharger **116** draws air from the outside environment and forces it along a connection **121** to the induction system **314**. Both the compressor and exhaust turbine of the turbocharger system **116** are remotely located on chassis **11**, well displaced from engine compartment **15**. Connection **121** is preferably made of a highly thermally conductive material to promote cooling of the compressed air in the connection, although charge air cooling using the radiator **17** as a heat sink is still provided.

The major elements of the exhaust system are otherwise substantially unchanged. Extending toward the back of vehicle chassis **10** from the turbocharger are an SCR catalytic converter or NO*_{X}* adsorber **24** and, possibly, a muffler **26** connected serially by exhaust pipe **20**. CGI is provided at pressure by providing an exhaust gas recirculation conduit **123** from just downstream of the DPF **32**, but ahead of turbocharger **116** back to the induction system **314**.

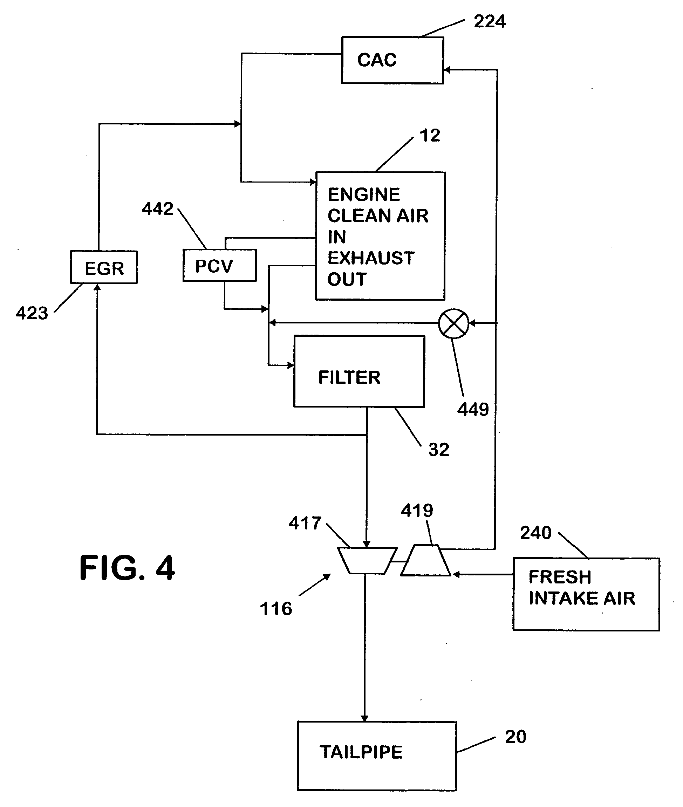

Referring now to **Fig. 4** the flow of air through the exhaust and induction systems of the present invention is illustrated. Air is drawn into the induction system by a compressor **419** through a fresh air intake **240**. From compressor **419** the compressed charge air passes to a charge air cooling system **244** (intercooler) and from there to the vehicle engine **12** where it supports the combustion of fuel with an oxidizer to produce a high pressure/high temperature by product or exhaust gas. As before, the exhaust gas is treated to remove effluents and to recover usable heat energy. Now though the exhaust gas is discharged directly to the diesel particulate filter **32** from the exhaust manifold and from the filter the gas passes to the remotely mounted turbocharger **116**. Turbocharger **116** includes an exhaust impeller stage **417** and a compressor stage **419**. The exhaust impeller or exhaust turbine **417** is mechanically coupled to the compressor **419** to provide motive energy for the compression of ambient air as charge air for engine **12**. Exhaust turbine **417** extracts heat energy from the exhaust gas. The exhaust gas, now at a lower temperature, passes out of an outlet from the turbine **417** to tailpipe **20** for discharge.

Typically regeneration of diesel particulate filters is initiated by a vehicle control system, which may adjust engine operation to supply fuel in the form of unburned or partially burned hydrocarbons to support ignition and rapid oxidation in the filter of carbon based deposits. Oxidation of course requires ample air and a valve **449** in the charge line from the induction compressor **419** to the CAC system **244** can be operated by the control system to admit air from compressor **419** into the filter **32**.

The basic flow of air through the induction and exhaust systems is modified to some extent by pollution control measures including provisions for partial exhaust gas recirculation and the handling of crankcase blow by. Since the exhaust gas which recirculated is to be returned to a pressurized induction chamber the recirculated exhaust gas is drawn at a relatively high pressure ahead of exhaust turbine **417**. At this stage the exhuast gas has been filtered by the DPF **32** and thus Clean Gas Insertion (CGI) is obtained. While such gas may be at sufficient pressure to allow intercooling, the recirculation link shown returns the exhaust gas to the induction system post after CAC system **244** where induction subsystem pressure is lower. Crankcase blow by is discharged to the exhaust system upstream of the diesel particulate filer **32**, and from the exhaust turbine **417**, avoiding fouling of the turbine because the gas has been filtered.

The arrangement of particulate filter and exhaust turbine of the present invention reduces the amount of exhaust reheat required to support initiation of oxidation in a diesel particulate filter. The invention further provides CGI without the need for an exhaust gas recirculation line compressor. At the price of some turbocharger efficiency, less heat is retained in the engine compartment of a vehicle. In addition, placing the turbocharger after the particulate filter allows use of the turbocharger for the efficient reduction of post filter exhaust gas temperature. Remote mounting of the turbocharger reduces the engine compartment heat sink requirements for charge air cooling, possibly allowing a reduction in radiator size. No exhaust system diffuser is required for cooling exhaust gas during filter regeneration to meet outlet temperature limitations. The engine does not have to be run in a high NOx state to supply the filter with oxygen to support regeneration. If desired for further heat retention reduction in the engine compartment, the diesel particulate filter may also be displaced from the engine compartment and placed physically further downstream in the exhaust subsystem, as long as it remains ahead of the turbocharger.

While the invention is shown in only one of its forms, it is not thus limited but is susceptible to various changes and modifications without departing from the spirit and scope of the invention.

## Claims

1. A motor vehicle comprising:
an air induction system;
an exhaust system;
an engine compartment;
an engine located in the engine compartment and connected to receive charge air from the air induction system to support internal combustion and further connected to discharge exhaust gas resulting from internal combustion to the exhaust system;
a particulate filter connected into the exhaust system downstream from the engine; and
a turbocharger having an exhaust turbine remotely mounted to the vehicle relative to the engine compartment and in the exhaust system downstream from the particulate filter and further having a compressor driven by the exhaust turbine for pumping air into the air induction system, the compressor also being remotely mounted relative the engine compartment.

2. A motor vehicle in accordance with claim 1, the engine being a diesel engine.

3. A motor vehicle in accordance with claim 2, further comprising:
a discharge valve from an engine crankcase to the exhaust system upstream from the particulate filter.

4. A motor vehicle in accordance with claim 2, further comprising:
an exhaust gas recirculation line connected from a discharge end of the particulate filter into the induction system.

5. A motor vehicle in accordance with claim 2,
a valve selectively operable for transferring compressed air from the compressor to an inlet for the particulate filter.

6. An internal combustion engine system, comprising:
an air induction system;
an exhaust system;
combustion chambers connected to receive charge air from the air induction system to support internal combustion and further connected to discharge exhaust gas resulting from internal combustion to the exhaust system;
a particulate filter connected into the exhaust system downstream from the combustion chambers; and
a turbocharger having an exhaust turbine in the exhaust system downstream from the particulate filter and further having a compressor driven by the exhaust turbine for pumping air into the induction system.

7. An internal combustion engine in accordance with claim 6, the internal combusion engine being a diesel cycle engine.

8. An internal combusion engine in accordance with claim 7, further comprising:
a discharge valve from an engine crankcase to the exhaust system upstream from the particulate filter.

9. An internal combustion engine in accordance with claim 7, further comprising:
an exhaust gas recirculation line connected from a discharge end of the particulate filter into the air induction system.

10. A motor vehicle in accordance with claim 7, further comprising:
a valve selectively operable for transferring compressed air from the compressor to an inlet for the particulate filter.
